# EUROPÄISCHE PATENTSCHRIFT

(11) **EP 3 388 902 B1**
(45) Veröffentlichungstag und Bekanntmachung des Hinweises auf die Patenterteilung: **18.02.2026**
(21) Anmeldenummer: 17165756.2
(22) Anmeldetag: 10.04.2017
(51) Int. Cl.: G05B 19/048, G05B 9/02

(54) **SICHERHEITSGERICHTETES AUTOMATISIERUNGSSYSTEM**
SAFETY-ORIENTED AUTOMATION SYSTEM
SYSTÈME D'AUTOMATISATION SÉCURISÉE

(43) Veröffentlichungstag der Anmeldung: 17.10.2018
(73) Patentinhaber: Siemens Aktiengesellschaft, 80333 München (DE)
(72) Erfinder: Barthel, Herbert, 91074 Herzogenaurach (DE); Walter, Maximilian, 90408 Nürnberg (DE)
(74) Vertreter: Siemens Patent Attorneys

(56) Entgegenhaltungen:
- EP-A1- 1 933 497
- DE-A1- 102013 003 166
- US-A1- 2004 158 713
- US-A1- 2005 065 647
- US-A1- 2009 105 849
- US-A1- 2015 229 654
- "Industrial communication networks - Profiles - Part 3: Functional safety fieldbuses - General rules and profile definitions", IEC 61784-3:2016, IEC, 3, RUE DE VAREMB�, PO BOX 131, CH-1211 GENEVA 20, SWITZERLAND, 13 May 2016 (2016-05-13), pages 1 - 166, XP082003909, [retrieved on 20160513]

## Beschreibung

Die Erfindung betrifft ein Automatisierungssystem umfassend automatisch an- und abkoppelbare Automatisierungsgeräte, einen Feldbus mit mindestens drei Ankopplungsstellen, welche derart ausgestaltet sind, das ein automatisches An- und Abkoppeln der Automatisierungsgeräte an den Feldbus möglich ist, wobei die jeweils angekoppelten Automatisierungsgeräte ausgestaltet sind, untereinander funktional sichere Verbindungen über den Feldbus aufzubauen, wobei die dadurch erreichte funktionale Sicherheit zur Vermeidung von gefährlichen Fehlfunktionen durch Fehler dient.

Im Sinne der Erfindung bedeutet funktionale Sicherheit, die Sicherheit für einen Teil eines Automatisierungssystems, der von einer korrekten Funktion der sicherheitsbezogenen Systeme und externen Einrichtungen zur Risikominimierung abhängt. Funktionale Sicherheit ist dann gegeben, wenn jedes Risiko über Sicherheitsfunktionen so abgesichert wird, dass die Maschine bzw. das dazugehörige Automatisierungssystem als sicher bezeichnet werden kann. Man spricht in diesem Fall von sicherheitsgerichteten Automatisierungssystemen.

Funktionale Sicherheit wird beispielsweise bei einem Werkzeugwechsler benötigt. Beispielsweise arbeiten in einer Fertigungszelle mehrere Roboter, die abwechselnd mit mehreren Werkzeugen (z.B. Schweißzangen) arbeiten. Wenn ein Roboter ein Werkzeug greift, wird eine funktional sichere Verbindung zwischen dem Werkzeug und der Steuerung aufgebaut, die den Roboter kontrolliert. Selten benutzte Werkzeuge werden von den Robotern geteilt und können daher wechselweise an unterschiedlichen Robotern zum Einsatz kommen. Eine sichere Kommunikationsverbindung zum Werkzeug darf nur zur Steuerung des Roboters aufgebaut werden, der das Werkzeug auch gerade benutzt. Eine physische Separierung kommt nicht in Frage, da die Steuerung der Roboter untereinander kommunizieren muss.

Die Ankopplungsstellen können beispielsweise in diesem Fall die Flansche der Roboter darstellen.

Die DE 10 2013 003 166 A1 offenbart ein Sicherheitsmodul für einen Feldbusteilnehmer und ein Automatisierungssystem. Zur Festlegung einer sicherheitsgerichteten Identifikationsadresse ist vorgesehen, in ein Gehäuse eines Sicherheitsmoduls eine Einstelleinrichtung anzuordnen. In dieser Einstelleinrichtung, beispielsweise einen DIL-Schalter, wird eine eindeutige Identifikationsadresse eingestellt.

Die US 2004/0158713 A1 offenbart ein Prozesssteuerungssystem mit eingebettetem Sicherheitssystem. Bei dem System umfasst jeder Knoten sowohl Prozesssteuerungssysteme- als auch Sicherheitssystemgeräte, die über eine Busstruktur miteinander verbunden sind, die auf einer Rückwandplatine vorgesehen werden kann, in der verschiedene Geräte befestigt sind.

Die US 2009/0105849 A1 offenbart ein Feldgerät zum Betrieb in einem offenen, blockorientierten, sicherheitsgerichteten Steuersystem. Dabei wird ein erweitertes SISRP-Protokoll zum Einfügen eines Authentifikators für weiterzugebende Daten eingeführt.

Die EP 1 933 497 A1 offenbart ein hinsichtlich der Sicherheit und Effizienz verbessertes Industrialisierungs-Automatisierungssystem, wobei ein geteiltes Autorisierungsschema mit einem threshold challenge/response protocol eingesetzt wird.

Die US2005065647 betrifft allgemein das Gebiet der Robotertechnik und insbesondere einen Schnellverbindungskommunikationsbus zwischen dem Master- und dem Werkzeugmodul eines Roboterwerkzeugkopplers.

Es ist Aufgabe der vorliegenden Erfindung, ein Automatisierungssystem mit einem steckplatzabhängigen Aufbau von funktional sicheren Feldbus-Verbindungen anzugeben, dabei aber auf eine Einstellvorrichtung, wie einen DIL-Schalter zu verzichten, um insbesondere für Automatisierungsgeräte, welche als ein Werkzeugwechsler ausgestaltet sind, die Sicherheit zu erhöhen.

Für das eingangs genannte Automatisierungssystem wird die Aufgabe dadurch gelöst, das zusätzlich zum Feldbus zwischen mindestens einer ersten Ankopplungsstelle und einer zweiten Ankopplungsstelle eine Punkt-zu-Punkt-Kommunikationsleitung vorhanden ist, wodurch für ein an die erste Ankopplungsstelle an- und abkoppelbares erstes Automatisierungsgerät und für einen an die zweite Ankopplungsstelle an- und abkoppelbares zweites Automatisierungsgerät eine Paarbeziehung zwischen den an den Feldbus an- und abkoppelbaren Automatisierungsgeräten vorhanden ist, wobei die an- und abkoppelbaren Automatisierungsgeräte jeweils einen Punkt-zu-Punkt-Kommunikationsendpunkt aufweisen, welche ausgestaltet sind, neben der Feldbuskommunikation zusätzlich eine Punkt-zu-Punkt-Kommunikation über die Punkt-zu-Punkt-Kommunikationsleitung aufzubauen, wobei insbesondere in Bezug auf Automatisierungsgeräte, welche als Werkzeugwechsler, Robotersysteme oder Spannrahmen ausgestaltet sind, ist es von Vorteil, wenn die Automatisierungsgeräte einem Handhabungs- und oder Bearbeitungssystem zugeordnet sind, und das zumindest ein Automatisierungsgerät als ein austauschbares Werkzeug mit einem Feldbusteilnehmer ausgestaltet ist, der für eine Ansteuerung von Aktoren auf dem Werkzeug ausgebildet ist, weiterhin weist mindestens eines der an- und abkoppelbaren Automatisierungsgeräte ein Prüfmittel auf, welches dazu ausgestaltet ist, anhand der durch die zusätzliche Punkt-zu-Punkt-Kommunikationsleitung möglichen zusätzlichen Kommunikation sicher zu prüfen, ob die gewünschte funktional sichere Verbindung zwischen den Automatisierungsgeräten aufgebaut wurde und ob sich auch das gewünschte Automatisierungsgerät am gegenüberliegenden Ende der Punkt-zu-Punkt-Kommunikationsleitung befindet, und nicht fälschlicherweise eine funktional sichere Verbindung zu einem Automatisierungsgerät aufgebaut wird, das sich an einer anderen Ankopplungsstelle befindet, welches nicht der Paarbeziehung entspricht, wobei die Punkt-zu-Punkt-Kommunikationsleitung eine physikalische Verbindung zwischen der ersten Ankopplungsstelle und der zweiten Ankopplungsstelle darstellt.

Vereinfacht gesagt wird erfindungsgemäß neben dem Feldbus bzw. neben einer Feldbuskommunikations-Leitung, eine zusätzliche Kommunikationsleitung zwischen den Automatisierungsgeräten angeordnet, wobei ein zusätzlicher Steckverbinder für das automatisierte Ankoppeln des Wechselgerätes an die Ankopplungsstelle vorhanden ist. Demnach könnte im gleichen Kabel der Feldbuskommunikationsleitung und am gleichen Stecker eine zusätzliche Kommunikationsleitung hinzugefügt werden, die funktional nur "Punkt-zu-Punkt"-Kommunikation erlaubt. Die Verwendung einer Punkt-zu-Punkt-Verbindung bewirkt, dass es kein Fehlerszenario für dieses Kommunikationsprotokoll gibt, bei dem ein vom Sender gesendetes Telegramm von einer anderen als den gewünschten Empfänger empfangen werden kann. Eine derartige Punkt-zu-Punkt-Kopplung kann so aufgebaut werden, dass über die zu einen Zeitpunkt X gegebene Stecker-Verbindung, das erste Automatisierungsgerät mit dem zweiten Automatisierungsgerät sicher kommunizieren darf. Die zu dem Zeitpunkt X gegebene Steckerverbindung für die Punkt-zu-Punkt-Kommunikation gibt demnach vor, welche kommunikationstechnische mögliche Verbindung zustande kommen darf. So können die beiden Automatisierungsgeräte sicher prüfen, ob sie gerade wirklich miteinander verbunden sind oder nicht. Sobald diese Prüfung erfolgt ist, kann eine sichere Feldbusverbindung zwischen den Automatisierungsgeräten über den Feldbus genutzt werden.

In einer weiteren Ausgestaltungsform sind vier Ankopplungsstellen vorhanden, und zusätzlich zum Feldbus zwischen einer dritten Ankopplungsstelle und einer vierten Ankopplungsstelle ist eine zweite Punkt-zu-Punkt-Kommunikationsleitung vorhanden, wodurch für ein an die dritte Ankopplungsstelle an- und abkoppelbares Automatisierungsgerät und für ein an die vierte Ankopplungsstelle an- und abkoppelbares Automatisierungsgerät eine weitere Paarbeziehung zwischen an den Feldbus an- und abkoppelbaren Automatisierungsgeräten vorhanden ist.

In einer ersten Ausgestaltungsvariante weisen die Prüfmittel zusätzlich Mittel zum Durchführen eines Challenge-Response-Verfahrens auf. Eine sichere Prüfung der bestehenden Kommunikationsverbindung zwischen zwei an- und abkoppelbaren Automatisierungsgeräten kann dann mit einem Challenge-Response-Verfahren durchgeführt werden. Das erste Automatisierungsgerät formuliert dann mit den Mitteln zur Durchführung des Challenge-Response-Verfahrens zu jedem Zeitpunkt eine unterschiedliche Anfrage (Challenge), die von dem zweiten Automatisierungsgerät bzw. von dem Partner-Automatisierungsgerät aus der Paarbeziehung in geeigneter Weise beantwortet werden muss (Response), sobald die Steckverbindung hergestellt wird. Für eine neue Herstellung der Steckverbindung ändert das erste Automatisierungsgerät die Anfrage. Auf diese Weise ist sichergestellt, dass die Anfrage nicht in fehlerhafter Weise durch eine Speichernetzkomponente, z.B. Router, mithilfe einer veralteten Nachricht beantwortet werden kann.

Bei dieser Ausgestaltungsvariante sind die erste Punkt-zu-Punkt-Kommunikationsleitung und die zweite Punkt-zu-Punkt-Kommunikationsleitung und die in dem Automatisierungsgeräten angeordneten entsprechenden Punkt-zu-Punkt-Kommunikationsendpunkte als eine standardisierte IO-Link Punkt-zu-Punkt-Kopplung ausgestaltet.

Eine zweite Ausgestaltungsvariante schlägt vor, die erste Punkt-zu-Punkt-Kommunikationsleitung und die zweite Punkt-zu-Punkt-Kommunikationsleitung und die in den Automatisierungsgeräten angeordneten entsprechenden Punkt-zu-Punkt-Kommunikationsendpunkte als eine funktional sichere IO-Link Punkt-zu-Punkt-Kopplung mit einem funktional sicheren Protokoll auszugestalten. Dafür werden die Punkt-zu-Punkt-Kommunikationsendpunkte zusätzlich als funktional sichere Punkt-zu-Punkt-Kommunikationsendpunkte ausgestaltet.

Weiterhin ist es ratsam, wenn die Automatisierungsgeräte für die funktional sichere Kommunikation funktional sichere Feldbus-Kommunikations-Endpunkte aufweisen.

Die Zeichnung zeigt ein Ausführungsbeispiel der Erfindung, dabei zeigt die
- FIG 1: ein Automatisierungssystem mit einem Feldbus und Ankopplungsstellen nach dem Stand der Technik,
- FIG 2: das Automatisierungssystem nach FIG 1 mit der Darstellung einer Falschverbindung,
- FIG 3: ein erfindungsgemäßes Automatisierungssystem mit zusätzlichen Punkt-zu-Punkt-Kommunikationsleitungen und
- FIG 4: das erfindungsgemäße Automatisierungssystem mit zusätzlichen Punkt-zu-Punkt-Kommunikationsleitungen unter Benutzung einer funktional sicheren Punkt-zu-Punkt-Kopplung.

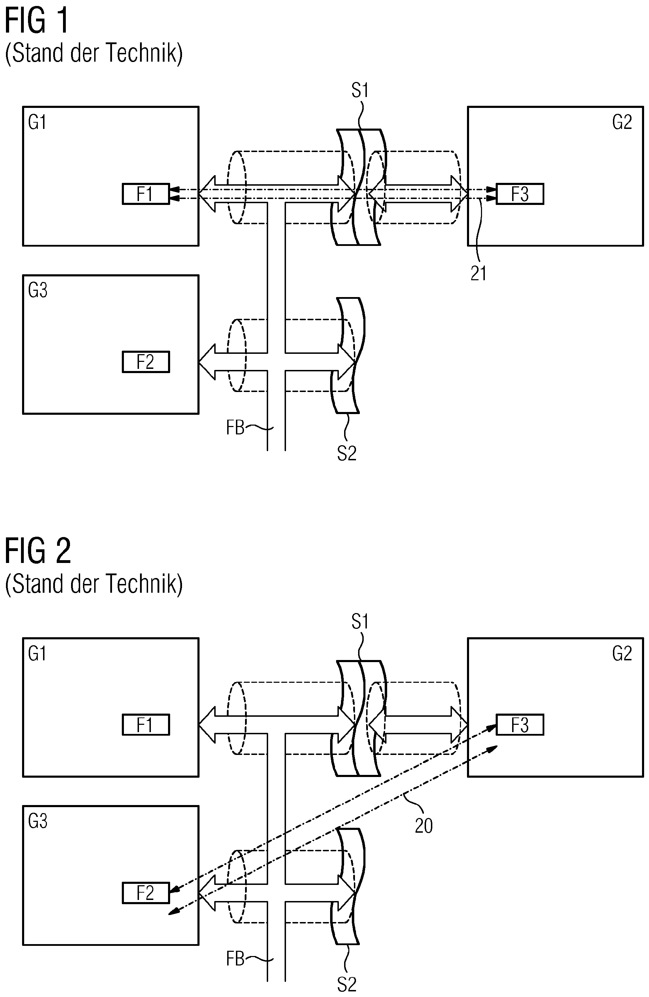

Gemäß der FIG 1 ist das grundsätzliche Problem mit dem Aufbau von funktional sicheren Verbindungen zwischen an- und abkoppelbaren Automatisierungsgeräten dargestellt. Die Kommunikation zwischen einem ersten Automatisierungsgerät G1 und einem zweiten Automatisierungsgeräte G2 bzw. zwischen einem dritten Automatisierungsgerät G3 und dem zweiten Automatisierungsgerät G2 sei funktional sicherheitsrelevant. Zum Beispiel können sich auf dem zweiten Automatisierungsgerät G2 sichere Sensoren und/oder Aktoren befinden, die über einen sicheren Kanal mit dem ersten Automatisierungsgerät G1 bzw. dem dritten Automatisierungsgerät G3 kommunizieren sollen. Die sichere Kommunikation soll auch dazu dienen, sicher zu erkennen, welche Geräte z.Z. miteinander verbunden sind. Zum Beispiel soll das zweite Automatisierungsgerät G2 bestimmte Aktionen ausführen dürfen, solange es mit dem ersten Automatisierungsgerät G1 verbunden ist. Dieselben Aktionen sollen aber aus Sicherheitsgründen verboten sein, wenn das zweite Automatisierungsgerät G2 mit dem dritten Automatisierungsgerät G3 verbunden ist.

Bei der Sicherheit von Automatisierungsgeräten ergibt sich beispielsweise folgendes Problem: Ein Fehler bei der Verwendung des zweiten Automatisierungsgerätes G2 durch die Automatisierungsgeräte G1, G3 muss aus Gründen der funktionalen Sicherheit mit einer hohen Wahrscheinlichkeit erkannt werden und zu einem sicheren Zustand führen. Beispielsweise könnte ein Fehler auftreten bei dem das zweite Automatisierungsgerät G2, welches mit dem ersten Automatisierungsgerät G1 verbunden ist, aber es wird aufgrund eines Fehlers eine logische Verbindung zwischen dem dritten Automatisierungsgerät G3 und dem zweiten Automatisierungsgerät G2 aufbaut (siehe hierzu FIG 2). Zwischen dem dritten Automatisierungsgerät G3 und dem zweiten Automatisierungsgerät G2 ist irrtümlicherweise eine Falschverbindung 20 aufgebaut worden. Ein bisher gängiger Mechanismus zur Erkennung falsch aufgebauter Verbindungen oder zur Erkennung von Adressierfehlern ist die Verwendung eindeutiger Bezeichner für die einzelnen Verbindungen in der sicheren Kommunikationsschicht (z.B. "Codename" bei Profisafe). Im vorliegenden Fall bietet aber der Bezeichner "Codename" nicht die erforderliche Fehleraufdeckung, welche für den dargestellten Fall in einem funktional sicheren Kommunikations-Layer genutzten Feldbus (wie in der IEC 61874-3X dargestellten funktional sicheren Kommunikations-Layern) gewünscht ist. Dies liegt daran, dass der Bezeichner "Codename" im zweiten Automatisierungsgerät G2 von beiden anderen Automatisierungsgeräten G1, G3 sichtbar sein kann, auch wenn die Automatisierungsgeräte nicht an dem zugehörigen Ankopplungsstellen angekoppelt sind. Gesucht ist also eine Lösung, die den Aufbau einer falschen Verbindung sicher erkennt und mit einem einzelnen Bezeichner bzw. "Codename" für die Verbindung auskommt, der auch wechselweise verwendet werden kann.

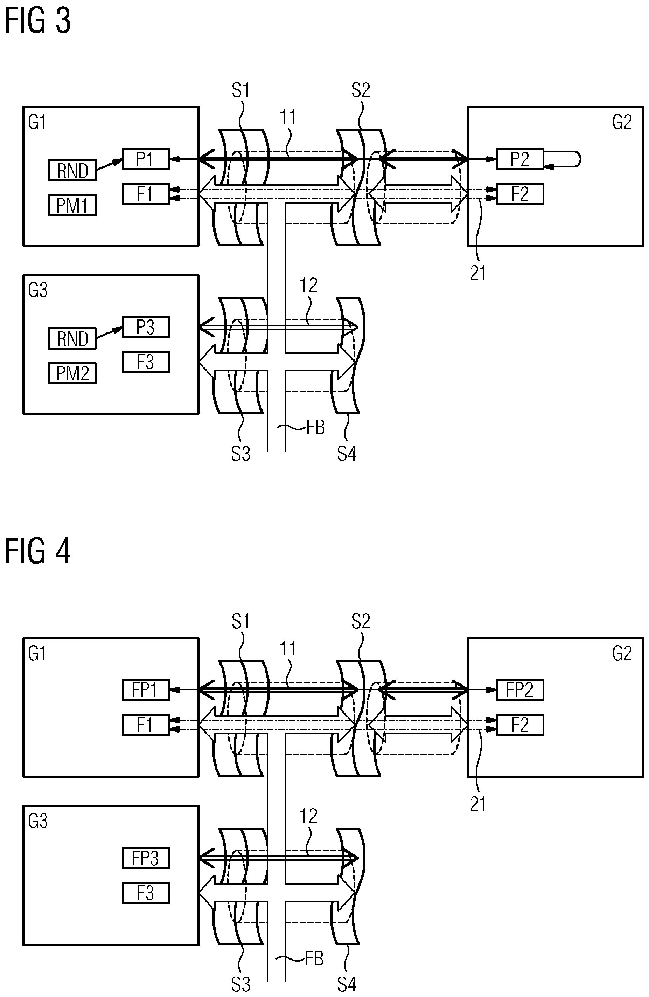

Mit der FIG 3 ist ein erfindungsgemäßes Automatisierungssystem 1 mit einem Feldbus FB gezeigt. Dem ersten Automatisierungsgerät G1 ist eine erste Ankopplungsstelle S1 und dem zweiten Automatisierungsgerät G2 ist eine zweite Ankopplungsstelle S2 zugeordnet. An der zweiten Ankopplungsstelle S2 ist das zweite Automatisierungsgerät G2 derart angedockt, dass es sowohl eine Kommunikationsverbindung zu dem Feldbus FB als auch eine Kommunikationsverbindung zu einer zusätzlich zu dem Feldbus FB zwischen dem ersten Automatisierungsgerät G1 und der ersten Ankopplungsstelle S1 bzw. der zweiten Ankopplungsstelle S2 verlegten ersten Punkt-zu-Punkt-Kommunikationsleitung 11 eine Verbindung aufbauen kann. Es ist demnach zusätzlich zum Feldbus FB zwischen der ersten Ankopplungsstelle S1 und der zweiten Ankopplungsstelle S2 eine Punkt-zu-Punkt-Kommunikationsleitung 11 vorhanden, wodurch für ein an die erste Ankopplungsstelle S1 an- und abkoppelbares erstes Automatisierungsgerät G1 und für ein an die zweite Ankopplungsstelle S2 an- und abkoppelbares zweites Automatisierungsgerät G2 eine Paarbeziehung zwischen an dem Feldbus FB an- und abkoppelbaren Automatisierungsgeräten G1, G2 vorhanden ist.

Für das sichere Erkennen eines Vorhandenseins eines Automatisierungsgerätes G2 an der vierten Ankopplungsstelle S4 weist die dritte Ankopplungsstelle S3 zusätzlich zu dem Feldbus FB eine zweite Punkt-zu-Punkt-Kommunikationsleitung 12 auf. Diese zweite Punkt-zu-Punkt-Kommunikationsleitung 12 führt von der dritten Ankopplungsstelle S3 mit einem Steckverbinder zu der vierten Ankopplungsstelle S4.

Wenn nun das zweite Automatisierungsgerät G2 an die zweite Ankopplungsstelle S2 angekoppelt wird, so kann sich ein in dem zweiten Automatisierungsgerät G2 befindliche zweiter Punkt-zu-Punkt-Kommunikationsendpunkt P2 über die zusätzliche Punkt-zu-Punkt-Kommunikationsleitung 11 mit einem im ersten Automatisierungsgerät G1 angeordneten ersten Punkt-zu-Punkt-Kommunikationsendpunkt P1 verbinden. Über ein erstes Prüfmittel PM1, welches ausgestaltet ist, anhand der zusätzlichen Kommunikation über die erste Punkt-zu-Punkt-Kommunikationsleitung 11 sicher zu prüfen, ob an der dem ersten Automatisierungsgerät G1 zugeordneten zweiten Ankopplungsstelle S2 das zweite Automatisierungsgerät G2 angeschlossen ist.

Auch das dritte Automatisierungsgerät G3 weist ein zweites Prüfmittel PM2 auf, welches ausgestaltet ist, sicher zu prüfen, ob an der vierten Ankopplungsstelle S4 das zweite Automatisierungsgerät G2 angeschlossen ist. Für die sichere Prüfung wird die zweite Punkt-zu-Punkt-Kommunikationsleitung 12 genutzt.

In dem Ausführungsbeispiel gemäß FIG 3 weisen die Prüfmittel PM1, PM2 weiterhin Mittel zur Durchführung eines Challenge-Response-Verfahrens auf. Ein beispielhaftes auf das Challenge-Response-Verfahren besteht darin, in dem ersten Automatisierungsgerät G1 und in dem dritten Automatisierungsgerät G3 einen hinreichend eindeutigen Zahlenwert zu nutzen (z.B. N-Bit-Zufallswert zu generieren). Hierzu steht ein Zufallsgenerator RND zur Verfügung. Die generierte Zufallszahl wird dem zweiten Automatisierungsgerät G2 über die zusätzlich eingeführte erste Punkt-zu-Punkt-Kommunikationsleitung 11 mitgeteilt. Das zweite Automatisierungsgerät G2 modifiziert den Zufallswert in einer vorher festgelegten Weise (z.B. bitweises Invertieren oder Multiplikation mit einer ungeraden N-Bit-Konstante) und sendet das Ergebnis zurück. Erhält das erste Automatisierungsgerät G1 bzw. das dritte Automatisierungsgerät G3 den erwarteten Rückgabewert, kann gefolgert werden, dass eine mechanische Verbindung zu dem zweiten Automatisierungsgerät G2 hergestellt ist. Über die funktional sichere Verbindung des ersten Automatisierungsgerätes G1 zu dem zweiten Automatisierungsgerät G2 über den Feldbus FB können dann sicherheitsbezogene Daten ausgetauscht werden. Hierfür stehen in dem ersten Automatisierungsgerät G1 und in dem zweiten Automatisierungsgerät G2 jeweils ein erster funktional sicherer Feldbuskommunikationsendpunkt F1 und ein zweiter funktional sicherer Feldbuskommunikationsendpunkt F2 zur Verfügung. Das zweite Automatisierungsgerät G2 weist mit dem zweiten funktional sicheren Feldbuskommunikationsendpunkt F2 das entsprechende Gegenstück für eine funktional sichere Kommunikation über den Feldbus FB auf. Mittels der genannten funktional sicheren Feldbuskommunikationsendpunkte F1, F2, F3 kann nun eine funktional sichere Kommunikation 21 zwischen den beiden Automatisierungsgeräten G1 und G2 geführt werden.

Gemäß FIG 4 ist eine Ausgestaltungsvariante gezeigt, wobei für die Punkt-zu-Punkt-Kommunikation eine funktional sichere Punkt-zu-Punkt-Kommunikation eingesetzt wird. Eine funktional sichere Punkt-zu-Punkt-Kommunikation kann man beispielsweise durch eine funktional sichere IO-Link-Punkt-zu-Punkt-Kopplung mit einem funktional sicheren Protokoll erreichen. Für diese funktional sichere Punkt-zu-Punkt-Kommunikation weist das erste Automatisierungsgerät G1 einen ersten funktional sicheren Punkt-zu-Punkt-Kommunikationsendpunkt FP1 und das zweite Automatisierungsgerät G1 einen zweiten funktional sicheren Punkt-zu-Punkt-Kommunikationsendpunkt FP2 auf. Das dritte Automatisierungsgerät G3 weist entsprechend einen dritten funktional sicheren Punkt-zu-Punkt-Kommunikationsendpunkt FP3 auf. Für eine funktional sichere zusätzliche Kommunikation zwischen dem ersten Automatisierungsgerät G1 und dem zweiten Automatisierungsgerät G2 werden für die Kommunikation über die erste Punkt-zu-Punkt-Kommunikationsleitung 11 die zusätzlichen funktional sicheren Punkt-zu-Punkt-Kommunikationsendpunkte FP1 und FP2 genutzt.

## Patentansprüche

1. Automatisierungssystem (1) umfassend
automatisch an- und abkoppelbare Automatisierungsgeräte (G1, G2, G3),
einen Feldbus (FB) mit mindestens drei Ankopplungsstellen (S1, S2, S3), welche derart ausgestaltet sind, dass ein automatisches An- und Abkoppeln der Automatisierungsgeräte (G1, G2, G3) an den Feldbus (FB) möglich ist, wobei die jeweils angekoppelten Automatisierungsgeräte (G1, G2, G3) ausgestaltet sind, untereinander funktional sichere Verbindungen über den Feldbus (FB) auf zu bauen, wobei die dadurch erreichte funktionale Sicherheit zur Vermeidung von gefährlichen Fehlfunktionen durch Fehler dient, wobei
zusätzlich zum Feldbus (FB) zwischen mindestens einer ersten Ankopplungsstelle (S1) und einer zweiten Ankopplungsstelle (S2) eine Punkt-zu-Punkt-Kommunikationsleitung (11) vorhanden ist, wodurch für ein an die erste Ankopplungsstelle (S1) anund abkoppelbares erstes Automatisierungsgerät (G1) und für ein an die zweite Ankopplungsstelle (S2) an- und abkoppelbares zweites Automatisierungsgerät (G2) eine Paarbeziehung zwischen an den Feldbus (FB) an- und abkoppelbaren Automatisierungsgeräten (G1, G2, G3) vorhanden ist, wobei die an- und abkoppelbaren Automatisierungsgeräte (G1, G2, G3) jeweils einen Punkt-zu-Punkt-Kommunikations-Endpunkt (P1,P2,P3) aufweisen, welche ausgestaltet sind, neben der Feldbuskommunikation zusätzlich eine Punkt-zu-Punkt-Kommunikation über die Punkt-zu-Punkt-Kommunikationsleitung (11) aufzubauen,
**dadurch gekennzeichnet, dass** die Automatisierungsgeräte (G1, G2, G3) einem Handhabungs- und/oder Bearbeitungssystem zugeordnet sind, und das zumindest ein Automatisierungsgerät (G1, G2, G3) als ein austauschbares Werkzeug mit einen Feldbusteilnehmer ausgestaltet ist, der für eine Ansteuerung von Aktoren auf dem Werkzeug ausgebildet ist und weiterhin weist mindestens eines der an- und abkoppelbaren Automatisierungsgeräte (G1, G2, G3) ein Prüfmittel (PM1, PM2) auf, welches dazu ausgestaltet ist, an Hand der durch die zusätzliche Punkt-zu-Punkt-Kommunikationsleitung (11) möglichen zusätzlichen Kommunikation sicher zu prüfen, ob die gewünschte funktional sichere Verbindung zwischen den Automatisierungsgeräten (G1, G2, G3) aufgebaut wurde und ob sich auch das gewünschte Automatisierungsgerät (G1, G2, G3) am gegenüberliegenden Ende der Punkt-zu-Punkt-Kommunikationsleitung (11) befindet, und nicht fälschlicherweise eine funktional sichere Verbindung zu einem Automatisierungsgerät (G1, G2, G3) aufgebaut wird, das sich an einer anderen Ankopplungsstelle (S3) befindet, welches nicht der Paarbeziehung entspricht, wobei die Punkt-zu-Punkt-Kommunikationsleitung (11) eine physikalische Steckerverbindung zwischen der ersten Ankopplungsstelle (S1) und der zweiten Ankopplungsstelle (S2) darstellt.

2. Automatisierungssystem (1) nach Anspruch 1, wobei vier Ankopplungsstellen (S1, S2, S3, S4) vorhanden sind, und zusätzlich zum Feldbus (FB) zwischen einer dritten Ankopplungsstelle (S3) und einer vierten Ankopplungsstelle (S4) eine zweite Punkt-zu-Punkt-Kommunikationsleitung (12) vorhanden ist, wodurch für ein an die dritte Ankopplungsstelle (S1) anund abkoppelbares Automatisierungsgerät (G1, G2, G3) und für ein an die vierte Ankopplungsstelle (S4) an- und abkoppelbares Automatisierungsgerät (G1, G2, G3) eine weitere Paarbeziehung zwischen an den Feldbus (FB) an- und abkoppelbaren Automatisierungsgeräten (G1, G2, G3) vorhanden ist.

3. Automatisierungssystem (1) nach Anspruch 1 oder 2, wobei die Prüfmittel (PM1, PM2) Mittel zum Durchführen eines Challenge-Response-Verfahrens aufweisen.

4. Automatisierungssystem (1) nach Anspruch 2 oder 3, wobei die erste Punkt-zu-Punkt-Kommunikationsleitung (11) und die zweite Punkt-zu-Punkt-Kommunikationsleitung (12) und die in den Automatisierungsgeräten (G1, G2, G3) angeordneten entsprechenden Punkt-zu-Punkt-Kommunikations-Endpunkte (P1, P2) als eine standardisierte IO-Link Punkt-zu-Punkt-Kopplung ausgestaltet ist.

5. Automatisierungssystem (1) nach Anspruch 2 oder 3, wobei die erste Punkt-zu-Punkt-Kommunikationsleitung (11) und die zweite Punkt-zu-Punkt-Kommunikationsleitung (12) und die in den Automatisierungsgeräten (G1, G2, G3) angeordneten entsprechenden Punkt-zu-Punkt-Kommunikations-Endpunkte (P1, P2) als eine funktional sichere IO-Link Punkt-zu-Punkt-Kopplung mit einem funktional sicheren Protokoll ausgestaltet ist.

## Claims

1. Automation system (1) comprising
automation devices (G1, G2, G3) that are capable of being coupled and uncoupled automatically,
a field bus (FB) with at least three coupling points (S1, S2, S3) which are configured such that an automatic coupling and uncoupling of the automation devices (G1, G2, G3) to/from the field bus (FB) is possible, wherein the respectively coupled automation devices (G1, G2, G3) are configured to set up functionally safe connections between themselves via the field bus (FB), wherein the functional safety achieved thereby serves to prevent dangerous malfunctions due to errors, wherein
a point-to-point communications link (11) is present between at least a first coupling point (S1) and a second coupling point (S2) in addition to the field bus (FB), with the result that for a first automation device (G1) capable of being coupled and uncoupled to/from the first coupling point (S1) and for a second automation device (G2) capable of being coupled and uncoupled to/from the second coupling point (S2), a paired relationship is present between automation devices (G1, G2, G3) capable of being coupled and uncoupled to/from the field bus (FB), wherein the automation devices (G1, G2, G3) capable of being coupled and uncoupled each have a point-to-point communications endpoint (P1, P2, P3), which said endpoints are configured to set up additionally, alongside the field bus communication, a point-to-point communication via the point-to-point communications link (11),
**characterised in that** the automation devices (G1, G2, G3) are assigned to a handling and/or processing system and that at least one automation device (G1, G2, G3) is configured in the form of an exchangeable tool with a field bus user configured for activation of actuators on the tool, and furthermore at least one of the automation devices (G1, G2, G3) capable of being coupled and uncoupled has a test means (PM1, PM2) which is configured so as to safely test, by using the additional communication made possible by the additional point-to-point communications link (11), whether the desired functionally safe connection was set up between the automation devices (G1, G2, G3) and whether also the desired automation device (G1, G2, G3) is located at the opposite end of the point-to-point communications link (11) and a functionally safe connection is not being set up erroneously to an automation device (G1, G2, G3) which is located at another coupling point (S3) which does not correspond to the paired relationship, wherein the point-to-point communications link (11) represents a physical plug connection between the first coupling point (S1) and the second coupling point (S2).

2. Automation system (1) according to claim 1, wherein four coupling points (S1, S2, S3, S4) are present and a second point-to-point communications link (12) is present between a third coupling point (S3) and a fourth coupling point (S4) in addition to the field bus (FB), with the result that for an automation device (G1, G2, G3) capable of being coupled and uncoupled to/from the third coupling point (S1) and for an automation device (G1, G2, G3) capable of being coupled and uncoupled to/from the fourth coupling point (S4), a further paired relationship is present between automation devices (G1, G2, G3) capable of being coupled and uncoupled to/from the field bus (FB).

3. Automation system (1) according to claim 1 or 2, wherein the test means (PM1, PM2) have means for carrying out a Challenge/Response method.

4. Automation system (1) according to claim 2 or 3, wherein the first point-to-point communications link (11) and the second point-to-point communications link (12), and the corresponding point-to-point communications endpoints (P1, P2) arranged in the automation devices (G1, G2, G3) are configured in the form of a standardised IO link point-to-point coupling.

5. Automation system (1) according to claim 2 or 3, wherein the first point-to-point communications link (11) and the second point-to-point communications link (12), and the corresponding point-to-point communications endpoints (P1, P2) arranged in the automation devices (G1, G2, G3) are configured in the form of a functionally safe IO link point-to-point coupling with a functionally safe protocol.

## Revendications

1. Système (1) d'automatisation comprenant
des appareils (G1, G2, G3) d'automatisation pouvant être connectés et déconnectés automatiquement,
un bus (FB) de terrain ayant au moins trois points (S1, S2, S3) de connexion, qui sont conformés de manière à rendre possible une connexion et une déconnexion automatique des appareils (G1, G2, G3) d'automatisation au bus (FB) de terrain, dans lequel les appareils (G1, G2, G3) d'automatisation connectés respectivement sont conformés pour bâtir entre eux des liaisons sécurisées fonctionnellement en passant par le bus (FB) de terrain, dans lequel la sécurité fonctionnelle, ainsi obtenue, sert à empêcher des fonctionnements défectueux dangereux par des défauts, dans lequel
supplémentairement au bus (FB) de terrain, il y a entre au moins un premier point (S1) de connexion et un deuxième point (S2) de connexion une ligne (11) de communication point à point, grâce à laquelle il y a, pour un premier appareil (G1) d'automatisation pouvant être connecté à et déconnecté du premier point (S1) de connexion et pour un deuxième appareil (G2) d'automatisation pouvant être connecté à et déconnecté du deuxième point (S2) de connexion, une relation de paire entre des appareils (G1, G2, G3) d'automatisation pouvant être connectés et déconnectés au bus (FB) de terrain, dans lequel les appareils (G1, G2, G3) d'automatisation pouvant être connectés et déconnectés ont respectivement un point (P1, P2, P3) final de communication point à point, qui sont conformés pour bâtir à côté de la communication par bus de terrain supplémentairement une communication point à point en passant par la ligne (11) de communication point à point,
**caractérisé en ce que** les appareils (G1, G2, G3) d'automatisation sont affectés à un système de manipulation et/ou de traitement, et **en ce que** le au moins un appareil (G1, G2, G3) d'automatisation est conformé en outil pouvant être remplacé et ayant un participant au bus de terrain et en outre au moins l'un des appareils (G1, G2, G3) d'automatisation pouvant être connecté et déconnecté a un moyen (PM1, PM2) de contrôle, qui est conformé pour contrôler d'une manière sûre, à l'aide de la communication supplémentaire possible par la ligne (11) de communication point à point supplémentaire, si la liaison sécurisée fonctionnellement souhaitée entre les appareils (G1, G2, G3) d'automatisation a été bâtie et si également l'appareil (G1, G2, G3) d'automatisation souhaité se trouve à l'extrémité opposée de la ligne (11) de communication point à point et si, d'une manière erronée, une liaison sécurisée fonctionnellement n'a pas été bâtie avec un autre appareil (G1, G2, G3) d'automatisation, qui se trouve en un autre point (S3) de connexion, qui ne correspond pas à la liaison par paire, dans lequel la ligne (11) de communication point à point représente une liaison physique par enfichage entre le premier point (S1) de connexion et le deuxième point (S2) de connexion.

2. Système (1) d'automatisation suivant la revendication 1, dans lequel il y a quatre points (S1, S2, S3, S4) de connexion et supplémentairement au bus (FB) de terrain entre un troisième point (S3) de connexion et un quatrième point (S4) de connexion, il y a une deuxième ligne (12) de communication point à point, grâce à laquelle, pour un appareil (G1, G2, G3) d'automatisation pouvant être connecté à et déconnecté du troisième point (S1) de connexion et pour un appareil (G1, G2, G3) d'automatisation pouvant être connecté à et déconnecté du quatrième point (S4) de connexion, il y a une autre relation de paire entre les appareils (G1, G2, G3) d'automatisation pouvant être connectés du et déconnectés du bus (FB) de terrain.

3. Système (1) d'automatisation suivant la revendication 1 ou 2, dans lequel les moyens (PM1, PM2) de contrôle ont des moyens pour effectuer un procédé challenge-response.

4. Système (1) d'automatisation suivant la revendication 2 ou 3, dans lequel la première ligne (11) de communication point à point et la deuxième ligne (12) de communication point à point et les points (P1, P2) de fin de communication point à point correspondants disposés sur les appareils (G1, G2, G3) d'automatisation sont conformés sous la forme d'une connexion point à point à liaison entrée-sortie normalisée.

5. Système (1) d'automatisation suivant la revendication 2 ou 3, dans lequel la première ligne (11) de communication point à point et la deuxième ligne (12) de communication point à point et les points (P1, P2) de fin de communication point à point correspondants disposés dans les appareils (G1, G2, G3) d'automatisation sont conformés sous la forme d'une connexion point à point à liaison entrée-sortie sécurisée fonctionnellement par un protocole sécurisé fonctionnellement.
